# EUROPÄISCHE PATENTANMELDUNG

(11) **EP 2 527 669 A1**
(43) Veröffentlichungstag der Anmeldung: **28.11.2012**
(21) Anmeldenummer: 11167719.1
(22) Anmeldetag: 26.05.2011
(51) Int. Cl.: F16B 45/02, B66B 19/00

(54) **Vorrichtung für die Montage eines Aufzuges in einem Aufzugsschacht**

(71) Anmelder: Inventio AG, 6052 Hergiswil NW (CH)
(72) Erfinder: Garcia, Alfonso, 50011 Zaragoza (ES); Minatta, Massimo, 6004 Luzern (CH)
(74) Vertreter: Blöchle, Hans

(57) **Zusammenfassung**

Eine Vorrichtung für die Montage eines Aufzuges in einem Aufzugsschacht umfasst einen Lasthaken und einen Greifarm. Der Lasthaken umfasst eine Haken, einen Verschluss und ein Element zur Anbringung einer Last. Der Haken ist dabei durch den Verschluss in einem ersten Zustand verschlossen und in einem zweiten Zustand frei gegeben. Der Greifarm umfasst einen Schaft, ein Aufnahmeelement und eine Fernbetätigung. Dabei ist das Aufnahmeelement im Wesentlichen an einem ersten Ende des Schaftes angeordnet, und die Fernbetätigung ist im Wesentlichen an einem zweiten Ende des Schaftes angeordnet. Der Lasthaken ist im Aufnahmeelement derart aufnehmbar, dass durch eine Betätigung der Fernbetätigung des Greifarms der Verschluss des Lasthakens vom ersten in den zweiten Zustand bzw. vom zweiten in den ersten Zustand gebracht werden kann.

## Beschreibung

Aufzüge werden üblicherweise in dafür vorgesehenen Schächten installiert. Um Aufzugsbestandteile, wie beispielsweise Führungsschienen, im Aufzugsschacht während der Montage hochzuziehen, werden Hilfsantriebe verwendet. Diese Hilfsantriebe werden üblicherweise an Fixpunkten in einer Decke des Schachtes aufgehängt. Um den Hilfsantrieb am Fixpunkt in der Schachtdecke aufzuhängen, werden üblicherweise Podeste verwendet, welche im Schacht auf verschiedenen Höhen installiert werden. Ein solches Anbringen und anschliessendes Entfernen solcher Podeste ist allerdings zeit- und kostenaufwändig. Daher ist es erstrebenswert, den Aufzug ohne die Zuhilfenahme von Podesten im Aufzugsschacht zu installieren.

In der Veröffentlichungsschrift WO 98/40305 ist ein solches Verfahren zur Installation eines Aufzuges in einem Aufzugsschacht ohne die Verwendung von Podesten beschrieben. Dabei wird zur Einhängung des Hilfsantriebes an den Fixpunkt in der Schachtdecke ein Hilfsgerät verwendet. Dieses Hilfsgerät ist mit einer Schlaufe oder einem Haken, an welchem der Hilfsantrieb hängt, verbunden. Somit verbleibt das Hilfsgerät an dem Fixpunkt in der Schachtdecke hängen, solange der Hilfsantrieb dort eingehängt ist. Werden mehrere Hilfsantriebe oder auch andere Gegenstände an Fixpunkten in der Schachtdecke aufgehängt, werden somit mehrere Hilfsgeräte benötigt. Zudem können die an den Fixpunkten hängenden Hilfsgeräte bei weiteren Montageschritten störend wirken.

Es ist eine Aufgabe dieser Erfindung, eine Vorrichtung für die Montage eines Aufzuges in einem Aufzugsschacht bereit zu stellen, welche ein sicheres Ein- und Aushängen eines Lasthakens an einem Fixelement in der Schachtdecke erlaubt.

Diese Aufgabe wird durch eine Vorrichtung für die Montage eines Aufzuges in einem Aufzugsschacht umfassend einen Lasthaken und einen Greifarm gelöst. Der Lasthaken besteht aus einem Haken, einem Verschluss und einem Element zur Anbringung einer Last. Dabei ist der Haken durch den Verschluss in einem ersten Zustand verschlossen und in einem zweiten Zustand frei gegeben. Der Greifarm umfasst einen Schaft, ein Aufnahmeelement und eine Fernbetätigung. Dabei ist das Aufnahmeelement im Wesentlichen an einem ersten Ende des Schaftes angeordnet und die Fernbetätigung ist an einem zweiten Ende des Schaftes angeordnet. Der Lasthaken ist derart im Aufnahmeelement aufnehmbar, dass durch eine Betätigung der Fernbetätigung des Greifarms der Verschluss des Lasthakens vom ersten in den zweiten Zustand bzw. vom zweiten in den ersten Zustand gebracht werden kann.

Diese Vorrichtung hat den Vorteil, dass der Haken über die Fernbetätigung verschlossen und frei gegeben werden kann. Somit kann der Lasthaken mit Hilfe des Greifarms von einem obersten Stockwerk aus sicher an einem Fixpunkt in der Schachtdecke ein- bzw. ausgehängt werden. Zudem kann der Haken am Fixpunkt gesichert werden. Dadurch, dass der Lasthaken und der Greifarm als separate Elemente ausgebildet sind, können mit nur einem Greifarm mehrere Lasthaken an Fixpunkten in der Schachtdecke angebracht werden.

Diese Vorrichtung hat weiterhin den Vorteil, dass sie günstig in der Herstellung sowie einfach in der Bedienung und vorteilhafterweise wiederverwendbar ist.

In einer vorteilhaften Ausführungsform weist der Verschluss einen Eingriff auf, wobei das Aufnahmeelement einen Entriegler aufweist, welcher in den Eingriff des Verschlusses eingreift, wenn der Lasthaken vom Greifarm aufgenommen ist. Das mechanische Eingreifen des Entrieglers in den Verschluss erlaubt die Herstellung eines robusten und kostengünstigen Fernbetätigungsmechanismus.

In einer vorzugsweisen Ausführungsform ist der Entriegler der Fernbetätigung von einem ersten in einen zweiten Zustand bzw. vom zweiten Zustand in den ersten Zustand bringbar.

In einer vorzugsweisen Ausführungsform ist die Fernbetätigung über einen Seilzug mit dem Entriegler des Aufnahmeelementes verbunden, wobei die Fernbetätigung einen Hebelarm umfasst. Ein solcher Seilzug, auch Bowdenzug genannt, ist sowohl robust wie auch wartungsarm und kostengünstig.

In einer vorteilhaften Ausführungsform ist der Verschluss drehbar am Lasthaken angeordnet, wobei der Entriegler drehbar am Aufnahmeelement angeordnet ist. Durch die drehbare Anordnung des Verschlusses und des Entrieglers können der Verschluss und der Entriegler im Wesentlichen synchron miteinander bewegt werden, so dass der Verschluss auf einfache Art und Weise durch den Entriegler geöffnet bzw. geschlossen werden kann. In einer vorteilhaften Ausführungsform ist der Verschluss durch eine Feder mit einer Kraft beaufschlagt, wobei die Feder so angeordnet ist, dass bei einem Öffnen des Verschlusses die Federkraft überwunden wird, und dass die vorgespannte Feder ein Schliessen des Verschlusses unterstützt. Dies hat den Vorteil, dass der Haken durch die Feder verschlossen ist, wenn keine weiteren äusseren Einflüsse auf den Verschluss einwirken. Somit kann der Lasthaken ähnlich einem Schnappkarabiner an einer Lastschlaufe eingehängt und gesichert werden.

In einer vorteilhaften Ausführungsform wird der Verschluss im ersten Zustand von der Feder gegen ein Anschlagselement gedrückt. Dadurch wird sichergestellt, dass der Verschluss in der geschlossenen Position verharrt und nicht über diese verschlossene Position hinaus bewegt werden kann.

In einer vorteilhaften Ausführungsform ist eine Feder so am Entriegler angeordnet, dass sie der Feder, welche auf den Verschluss einwirkt, entgegenwirkt, wenn der Entriegler in den Verschluss eingreift. Bei einem Schliessen des Verschlusses wird also die Federkraft der Feder des Entrieglers überwunden, und die vorgespannte Feder des Entrieglers unterstützt ein Öffnen des Verschlusses. Vorteilhafterweise sind dabei die Federn des Entrieglers und des Verschlusses so dimensioniert, dass die Feder des Entrieglers die Feder des Verschlusses zurückdrückt, so dass ohne eine Betätigung der Fernbetätigung der Verschluss geöffnet ist. Dies hat den Vorteil, dass der Lasthaken ohne eine Betätigung der Fernbetätigung an einem Fixelement eingehängt werden kann und dass der Haken aktiv geschlossen werden muss. Somit kann das Einhängen des Lasthakens ohne zusätzliche Manipulationen am Greifarm erfolgen.

Weiterhin wird ein Verfahren zur Montage einer Aufzugsanlage in einem Aufzugsschacht vorgeschlagen. Das Verfahren umfasst die Schritte:
- Anbringen eines Lasthakens an einem Greifarm, wobei der Lasthaken einen Haken, einen Verschluss und ein Element zur Anbringung einer Last umfasst, und wobei der Greifarm einen Schaft, ein Aufnahmeelement zur Aufnahme des Lasthakens und eine Fernbetätigung umfasst;
- Einhängen des Lasthakens an einem Ankerelement, wobei eine Fernbetätigung am Greifarm in eine erste Position gebracht wird, um den Verschluss des Hakens zu schliessen, so dass der Lasthaken sicher am Ankerelement befestigt ist;
- Aushängen des Lasthakens aus dem Ankerelement, wobei der Greifarm am Lasthaken angebracht wird und wobei die Fernbetätigung am Greifarm in eine zweite Position gebracht wird, um den Verschluss des Hakens zu öffnen, so dass der Lasthaken aus dem Ankerelement ausgehängt werden kann.

In einer bevorzugten Ausführungsform umfasst das Verfahren die Schritte:
- Anhängen eines Hilfsantriebes am Lasthaken, so dass der Lasthaken den Hilfsantrieb trägt; und
- Anheben von Aufzugsbestandteilen im Aufzugsschacht mit dem Hilfsantrieb.

In einer bevorzugten Ausführungsform greift beim Einhängen und beim Aushängen des Lasthakens ein Entriegler, welcher am Aufnahmeelement des Greifarms angeordnet ist, in einen Eingriff, welcher am Verschluss des Lasthakens angeordnet ist, ein, wobei durch eine Bewegung des Entrieglers der Verschluss geschlossen, bzw. geöffnet wird.

In einer bevorzugten Ausführungsform weist die Fernbetätigung einen Hebel auf, welcher über einen Seilzug mit dem Entriegler gekoppelt ist, so dass durch eine Bewegung des Hebels der Entriegler bewegt wird.

In einer bevorzugten Ausführungsform wird der Verschluss durch eine Feder mit einer Kraft beaufschlagt, so dass der Verschluss ohne Einwirkung des Entrieglers den Haken verschliesst.

In einer weiteren bevorzugten Ausführungsform wird der Entriegler durch eine Feder mit einer Kraft beaufschlagt, so dass der Entriegler ohne Betätigung der Fernbetätigung in einer Position gehalten wird, in welcher der Entriegler den Verschluss des im Greifarm eingesetzten Lasthakens öffnet.

In einer weiteren bevorzugten Ausführungsform sind die Feder des Entrieglers und die Feder des Verschlusses derart ausgelegt, dass der Verschluss des Lasthakens geöffnet ist, wenn die Fernbetätigung nicht betätigt wird.

Weitere Einzelheiten und Vorteile der Erfindung werden im Folgenden anhand von Ausführungsbeispielen und unter Bezug auf die schematischen Zeichnungen beschrieben. Es zeigen:
- **Fig. 1**: eine beispielhafte Ausführungsform eines Aufzugsschachtes in Seitenansicht;
- **Fig. 2**: eine beispielhafte Ausführungsform eines Lasthakens;
- **Fig. 3**: eine beispielhafte Ausführungsform eines Greifarms;
- **Fig. 4A**: eine Seitenansicht einer beispielhaften Ausführungsform eines Aufnahmeelementes;
- **Fig. 4B**: eine räumliche Darstellung einer beispielhaften Ausführungsform eines Aufnahmeelementes;
- **Fig. 5A**: eine beispielhafte Ausführungsform eines Lasthakens und eines Greifarms, wobei der Haken des Lasthakens geöffnet ist; und
- **Fig. 5B**: eine beispielhafte Ausführungsform eines Lasthakens und eines Greifarms, wobei der Haken des Lasthakens verschlossen ist.

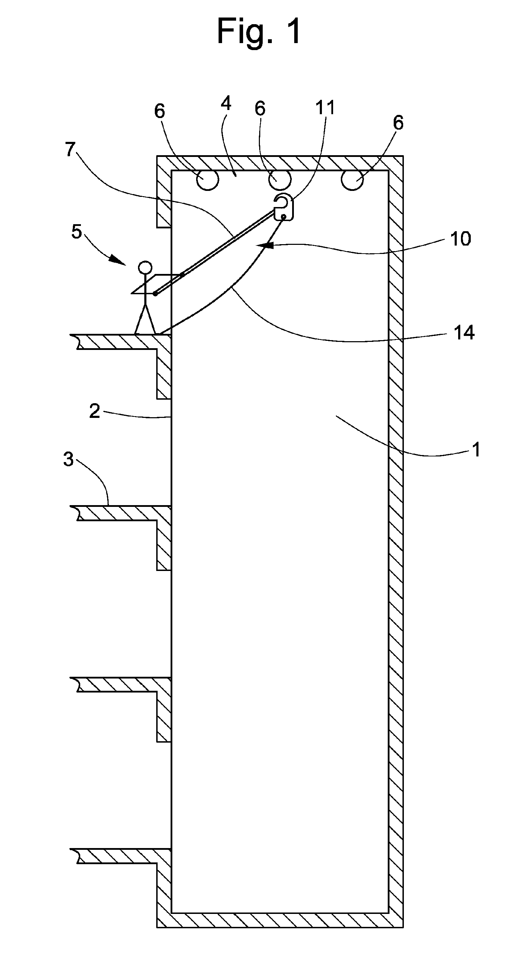

Figur 1 zeigt einen Aufzugsschacht 1 in Seitenansicht. Dieser beispielhafte Aufzugsschacht 1 weist vier Stockwerke auf, wobei jedem Stockwerkboden 3 eine Schachttür 2 zugeordnet ist. Auf dem obersten Stockwerkboden 3 steht ein Monteur 5. Der Monteur 5 hängt mit Hilfe eines Greifarms 7 einen Lasthaken 11 an einem Ankerelement 6, welches an einer Schachtdecke 4 befestigt ist, ein. Am Lasthaken 11 ist ein Tragelement 14 angebracht. Ein solches Tragelement 14 kann beispielsweise dazu verwendet werden, einen Hilfsantrieb (nicht dargestellt) an ein Ankerelement 6 zu hängen, oder beispielsweise einen Flaschenzug an das Ankerelement 6 zu befestigen, um weitere Gegenstände im Schacht hochzuziehen. Es versteht sich von selbst, dass der in Figur 1 dargestellte Aufzugsschacht 1 beispielhaften Charakter hat. So können beispielsweise Aufzugsschächte 1 mit mehr oder weniger Stockwerken und Schachtdecken mit mehr oder weniger oder andersartigen Ankerelementen eingesetzt werden.

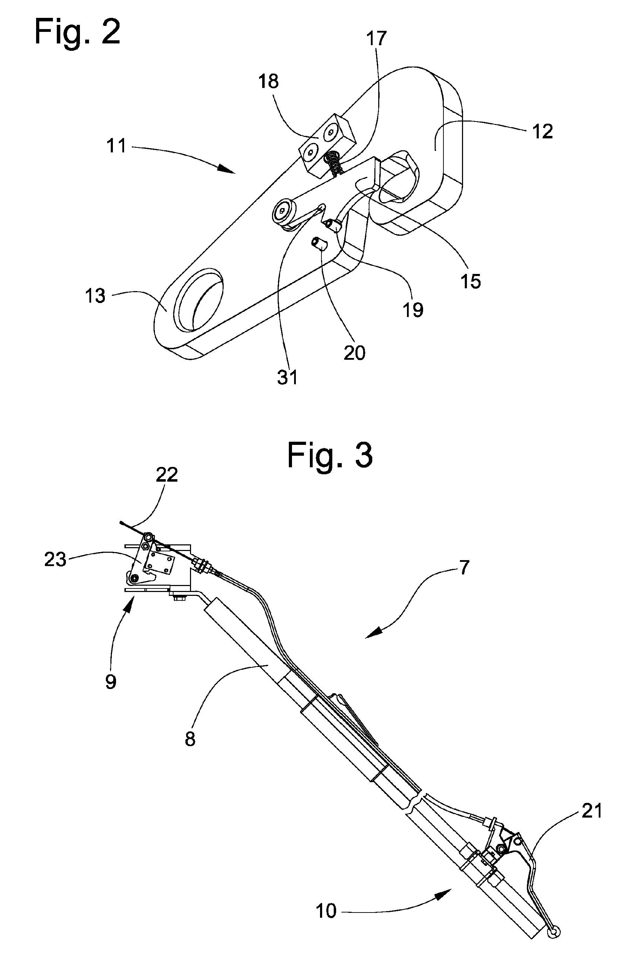

In Figur 2 ist eine beispielhafte Ausführungsform eines Lasthakens 11 dargestellt. Der Lasthaken 11 umfasst ein Element zur Anbringung einer Last 13, einen Haken 12 und einen Verschluss 15. In Figur 2 ist der Haken 12 durch den Verschluss 15 verschlossen.

In diesem Ausführungsbeispiel ist das Element zur Anbringung einer Last 13 als Öse ausgebildet. Alternativ dazu kann das Element zur Anbringung einer Last 13 auch andersartig ausgebildet sein, beispielsweise als Haken 12, als Schlaufe, als Magnet, oder als Verschluss.

Der Verschluss 15 ist drehbar am Lasthaken 11 angeordnet. Dabei ist der Verschluss 15 mit einer Feder 17 beaufschlagt. Die Feder 17 ist an einer Stütze 18 und am Verschluss 15 abgestützt. In Figur 2 ist der Verschluss 15 in einer ersten, verschlossenen Position. In dieser ersten Position wird der Verschluss 15 von der Feder 17 gegen einen Anschlag 19 gedrückt. In einer zweiten, nicht dargestellten Position ist der Verschluss 15 geöffnet, so dass der Haken 12 freigegeben ist. In dieser zweiten Position des Verschlusses 15 ist die Feder 17 gestaucht und vorgespannt.

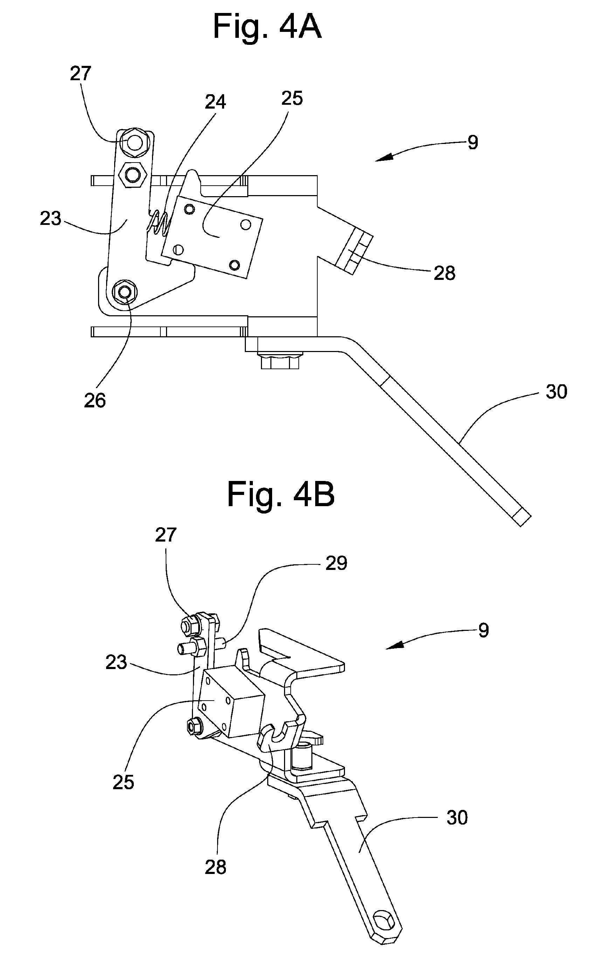

Der Verschluss 15 weist einen Eingriff 31 auf, welcher für eine Kopplung mit einem Entriegler des Greifarmes ausgebildet ist. Ein Zusammenwirken des Verschlusses 15 mit dem Entriegler wird in den Figuren 4A bis 5B näher erläutert.

Der Haken 12 ist C-förmig ausgebildet. Dabei hat der Haken 12 eine Öffnung, welche ein einfaches Ein- bzw. Aushängen erlaubt. Alternativ dazu kann der Haken 12 auch andersartig ausgebildet sein.

Der Lasthaken 11 weist zudem einen Bolzen 20 auf, welcher mit dem Greifarm 7 zusammenwirkt, um den Lasthaken 11 in gewünschter Art und Weise mit dem Greifarm 7 aufzunehmen.

Vorteilhafterweise ist der Lasthaken 11 robust, aber nicht zu schwer ausgebildet, so dass er mit dem Greifarm 7 von einer Person angehoben werden kann. Je nach Verwendungszweck kann der Lasthaken 11 grösser oder kleiner ausgebildet sein. In einer bevorzugten Ausführungsform beträgt eine Länge des Lasthakens 11 zwischen 10 cm und 40 cm.

In Figur 3 ist eine beispielhafte Ausführungsform eines Greifarms 7 dargestellt. Der Greifarm 7 umfasst einen Schaft 8, ein Aufnahmeelement 9 und eine Fernbetätigung 10. Dabei ist das Aufnahmeelement 9 an einem ersten Ende des Schaftes 8 angeordnet und die Fernbetätigung 10 ist an einem zweiten Ende des Schaftes 8 angeordnet.

Der Schaft 8 ist als steifes längliches Element ausgebildet. Dabei kann der Schaft 8 als teleskopartiges Element ausgebildet sein, so dass eine Gesamtlänge des Schaftes 8 an den jeweiligen Verhältnissen angepasst werden kann.

Das Aufnahmeelement 9 wird in den Figuren 4a und 4b näher erläutert. Es ist über einen Seilzug mit der Fernbetätigung 10 verbunden. Die Fernbetätigung 10 ist in der Art einer Fahrradbremse ausgebildet. Über einen Hebel 21 der Fernbetätigung 10 wird das Kabel 22 des Seilzuges hin und her bewegt. Diese Bewegung des Kabels 22 überträgt sich auf einen Entriegler 23, welcher drehbar am Aufnahmeelement 9 angeordnet ist.

In den Figuren 4A und 4B ist das Aufnahmeelement 9 dargestellt. Dabei zeigt die Figur 4A ein beispielhaftes Aufnahmeelement 9 in seitlicher Ansicht, und Figur 4B zeigt dieses beispielhafte Aufnahmeelement 9 in räumlicher Darstellung. Hier ist das Aufnahmeelement 9 ohne Schaft 8 des Greifarmes 7 und auch ohne Kabel 22 des Seilzuges dargestellt.

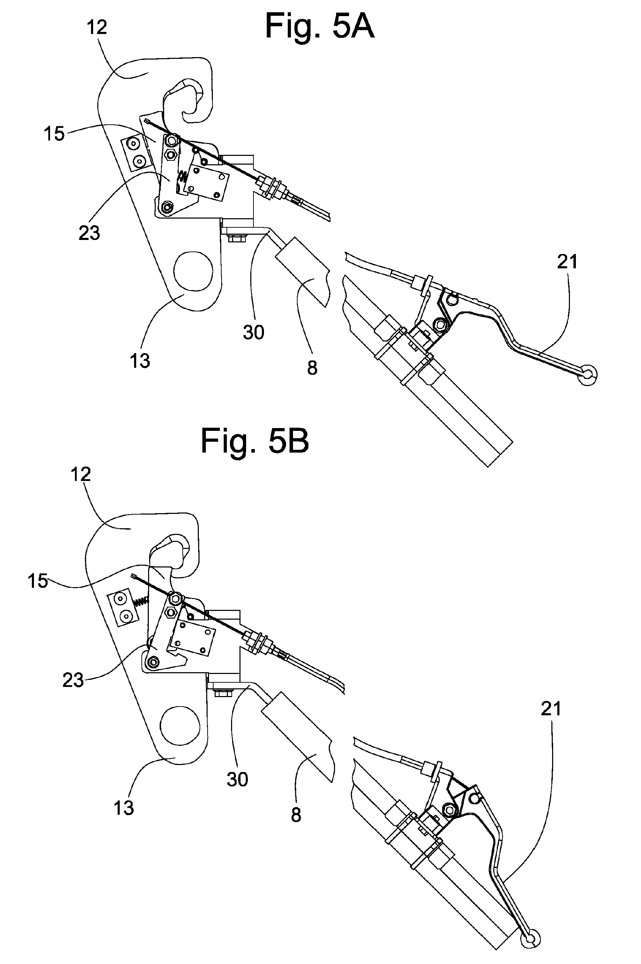

Über ein Verbindungselement 30 kann das Aufnahmeelement 9 mit dem Schaft 8 verbunden werden. Ein Entriegler 23 ist über ein Drehgelenk 26 drehbar mit dem Aufnahmeelement 9 verbunden. Der Entriegler 23 umfasst ein Kabelbefestigungselement 27 und einen Entrieglungsbolzen 29. Zudem ist der Entriegler 23 von einer Feder 24, welche mit einer Stütze 25 verbunden ist, beaufschlagt. Die Feder 24 ist dabei derart am Entriegler 23 angeordnet, dass sie durch ein Zudrücken des Hebels 21 der Fernbetätigung 10 komprimiert wird. Wird der Hebel 21 der Fernbetätigung 10 nicht betätigt, dann stellt die Feder 24 den Entriegler 23 in seine ursprüngliche Position zurück. Das Zusammenspiel des Entrieglers 23 mit dem Verschluss 15 des Lasthakens 11 wird in den Figuren 5a und 5b näher erläutert.

Der Seilzug wird über eine Kabelstütze 28 mit dem Aufnahmeelement 9 verbunden. Das Kabel 22 des Seilzuges wird am Kabelbefestigungselement 27 befestigt. Somit wirkt die Fernbetätigung 10 im Zusammenspiel mit dem Entriegler 23 und der Kabelstütze 28 ähnlich wie eine Fahrradbremse.

In den Figuren 5A und 5B ist ein Greifarm 7 mit eingesetztem Lasthaken 11 dargestellt. Dabei befindet sich der Lasthaken 11 in Figur 5A in seinem zweiten, geöffneten Zustand, und in Figur 5B in seinem ersten, geschlossenen Zustand. Im zweiten, geöffneten Zustand des Lasthakens 11 ist der Hebel 21 der Fernbetätigung 10 in seinem ursprünglichen Zustand. Im ersten, geschlossenen Zustand des Lasthakens 11 ist der Hebel 21 der Fernbetätigung 10 in seinem betätigten Zustand. Durch eine Bewegung des Hebels 21 der Fernbetätigung 10 wird der Entriegler 23 des Aufnahmeelementes 9 hin und her bewegt, wodurch der Verschluss 15 des Lasthakens 11 geöffnet, bzw. geschlossen wird. Dabei greift der Entrieglungsbolzen 29 des Entrieglers 23 in den Eingriff 31 des Verschlusses 15 ein. Die Federn 17, 24 des Entrieglers 23 und des Verschlusses 15 sind dabei so dimensioniert, dass ohne eine Betätigung des Hebels 21 der Fernbetätigung 10 der Verschluss 15 in seinem zweiten, geöffneten Zustand ist. Dies bedeutet, dass die Feder 24 des Entrieglers 23 die Feder 17 des Verschlusses 15 überwiegt. Durch eine Betätigung des Hebels 21 der Fernbetätigung 10 wird die Federkraft des Entrieglers 23 überwunden, so dass sich die komprimierte Feder 17 des Verschlusses 15 entfalten kann.

Der Lasthaken 11 ist nicht fest mit dem Greifarm 7 verbunden. Der Lasthaken 11 liegt lediglich im Aufnahmeelement 9 des Greifarmes 7 und kann aus diesem herausgehoben werden. Dadurch wird erreicht, dass der Lasthaken 11 mit dem Greifarm 7 an ein Ankerelement 6 gesetzt werden kann, ohne dass dabei der Greifarm 7 am Lasthaken 11 befestigt bleibt. Danach kann der Lasthaken 11 wieder vom Ankerelement 6 entfernt werden mit Hilfe des Greifarmes 7.

## Patentansprüche

1. Vorrichtung für die Montage eines Aufzuges in einem Aufzugsschacht (1), die Vorrichtung umfassend:
einen Lasthaken (11) mit
einem Haken (12),
einem Verschluss (15), wobei der Haken (12) durch den Verschluss (15) in einem ersten Zustand verschlossen ist und in einem zweiten Zustand freigegeben ist, und
einem Element zur Anbringung einer Last (13); und
einen Greifarm (7) mit
einem Schaft (8), und
einem Aufnahmeelement (9), welches im Wesentlichen an einem ersten Ende des Schaftes (8) angeordnet ist, und
einer Fernbetätigung (10), welche im Wesentlichen an einem zweiten Ende des Schaftes (8) angeordnet ist;
wobei der Lasthaken (11) im Aufnahmeelement (9) derart aufnehmbar ist, dass durch eine Betätigung der Fernbetätigung (10) des Greifarms (7) der Verschluss (15) des Lasthakens (11) vom ersten in den zweiten Zustand bzw. vom zweiten in den ersten Zustand gebracht werden kann.

2. Vorrichtung nach Anspruch 1, wobei der Verschluss (15) einen Eingriff (31) aufweist und wobei das Aufnahmeelement (9) einen Entriegler (23) aufweist, welcher in den Eingriff (31) des Verschlusses (15) eingreift, wenn der Lasthaken (11) im Greifarm (7) aufgenommen ist.

3. Vorrichtung nach Anspruch 2, wobei der Entriegler (23) von der Fernbetätigung (10) von einem ersten in einen zweiten Zustand bzw. vom zweiten Zustand in den ersten Zustand bringbar ist.

4. Vorrichtung nach Anspruch 3, wobei die Fernbetätigung (10) über einen Seilzug mit dem Entriegler (23) des Aufnahmeelementes (9) verbunden ist, und wobei die Fernbetätigung (10) einen Hebelarm (21) umfasst.

5. Vorrichtung nach einem der vorhergehenden Ansprüche, wobei der Verschluss (15) drehbar am Lasthaken (11) angeordnet ist und wobei der Entriegler (23) drehbar am Aufnahmeelement (9) angeordnet ist.

6. Vorrichtung nach einem der vorhergehenden Ansprüche, wobei der Verschluss (15) durch eine Feder (17) mit einer Kraft beaufschlagt ist, wobei die Feder (17) so angeordnet ist, dass bei einem Öffnen des Verschlusses (15) eine Federkraft überwunden wird, und dass die vorgespannte Feder (17) ein Schliessen des Verschlusses (15) unterstützt.

7. Vorrichtung nach Anspruch 6, wobei der Verschluss (15) im ersten Zustand von der Feder (17) gegen ein Anschlagselement (19) gedrückt wird.

8. Vorrichtung nach einem der Ansprüche 2 bis 7, wobei eine Feder (24) so am Entriegler (23) angeordnet ist dass bei einem Schliessen des Verschlusses (15) eine Federkraft der Feder (24) des Entrieglers (23) überwunden wird, und dass die vorgespannte Feder (24) des Entrieglers (23) ein Öffnen des Verschlusses (15) unterstützt, wenn der Entriegler (23) in den Verschluss (15) eingreift.

9. Verfahren zur Montage einer Aufzugsanlage in einem Aufzugsschacht 1, umfassend die Schritte:
Anbringen eines Lasthakens (11) an einem Greifarm (7), wobei der Lasthaken (11) einen Haken (12), einen Verschluss (15) und ein Element zur Anbringung einer Last (13) umfasst, und wobei der Greifarm (7) einen Schaft (8), ein Aufnahmeelement (9) zur Aufnahme des Lasthakens (11) und eine Fernbetätigung (10) umfasst;
Einhängen des Lasthakens (11) an einem Ankerelement (6), wobei eine Fernbetätigung (10) am Greifarm (7) in eine erste Position gebracht wird, um den Verschluss (15) des Hakens (12) zu schliessen, sodass der Lasthaken (11) sicher am Ankerelement (6) befestigt ist;
Aushängen des Lasthakens (11) aus dem Ankerelement (6), wobei der Greifarm (7) am Lasthaken (11) angebracht wird, und wobei die Fernbetätigung (10) am Greifarm (7) in eine zweite Position gebracht wird, um den Verschluss (15) des Hakens (12) zu öffnen, sodass der Lasthaken (11) aus dem Ankerelement (6) ausgehängt werden kann.

10. Verfahren nach Anspruch 9, umfassend die Schritte:
Anhängen eines Hilfsantriebes am Lasthaken (11), sodass der Lasthaken (11) den Hilfsantrieb trägt; und
Anheben von Aufzugsbestandteilen im Aufzugsschacht (1) mit dem Hilfsantrieb.

11. Verfahren nach Anspruch 9 oder 10, wobei beim Einhängen und beim Aushängen des Lasthakens (11) ein Entriegler (23), welcher am Aufnahmeelement (9) des Greifarms (7) angeordnet ist, in einen Eingriff, welcher am Verschluss (15) des Lasthakens (11) angeordnet ist, eingreift, wobei durch eine Bewegung des Entrieglers (23) der Verschluss (15) geschlossen bzw. geöffnet wird.

12. Verfahren nach einem der Ansprüche 9 bis 11, wobei die Fernbetätigung (10) einen Hebel (21) aufweist, welcher über einen Seilzug mit dem Entriegler (23) gekoppelt ist, sodass durch eine Bewegung des Hebels (21) der Entriegler (23) bewegt wird.

13. Verfahren nach einem der Ansprüche 9 bis 12, wobei der Verschluss (15) durch eine Feder (17) mit einer Kraft beaufschlagt wird, sodass der Verschluss (15) ohne Einwirkung des Entrieglers (23) den Haken (12) verschliesst.

14. Verfahren nach einem der Ansprüche 9 bis 13, wobei der Entriegler (23) durch eine Feder (24) mit einer Kraft beaufschlagt wird, sodass der Entriegler (23) ohne Betätigung der Fernbetätigung (10) in einer Position gehalten wird, in welcher der Entriegler (23) den Verschluss (15) des im Greifarm (7) eingesetzten Lasthakens (11) öffnet.

15. Verfahren nach Anspruch 14, wobei die Feder (24) des Entrieglers (23) und die Feder (17) des Verschlusses (15) derart ausgelegt sind, dass der Verschluss (15) des Lasthakens (11) geöffnet ist, wenn die Fernbetätigung (10) nicht betätigt wird.
